# EUROPÄISCHE PATENTSCHRIFT

(11) **EP 1 573 237 B1**
(45) Veröffentlichungstag und Bekanntmachung des Hinweises auf die Patenterteilung: **02.11.2011**
(21) Anmeldenummer: 03782111.3
(22) Anmeldetag: 27.11.2003
(51) Int. Cl.: F16J 1/20, F02F 3/00, F16J 1/16

(54) **BOLZENNABE EINES KOLBENS F R EINEN VERBRENNUNGSMOTOR**
PISTON-PIN BOSS OF A PISTON FOR AN INTERNAL COMBUSTION ENGINE
BOSSAGE D'AXE D'UN PISTON POUR UN MOTEUR A COMBUSTION INTERNE

(30) Priorität: 29.11.2002 DE 10255732
(43) Veröffentlichungstag der Anmeldung: 14.09.2005
(73) Patentinhaber: MAHLE GMBH, 70376 Stuttgart (DE)
(72) Erfinder: FEZER, Eberhard, 73635 Rudersberg-Steinenberg (DE)
(86) Internationale Anmeldenummer: PCT/DE2003/003929
(87) Internationale Veröffentlichungsnummer: WO 2004/051119

(56) Entgegenhaltungen:
- EP-A- 0 095 052
- DE-C- 3 609 019
- GB-A- 659 954
- GB-A- 1 593 118
- US-A- 4 359 973
- PATENT ABSTRACTS OF JAPAN Bd. 1997, Nr. 08, 29. August 1997 (1997-08-29) & JP 9 100745 A (UNISIA JECS CORP), 15. April 1997 (1997-04-15)
- PATENT ABSTRACTS OF JAPAN Bd. 1998, Nr. 04, 31. März 1998 (1998-03-31) & JP 9 310640 A (DAIHATSU MOTOR CO LTD), 2. Dezember 1997 (1997-12-02)
- PATENT ABSTRACTS OF JAPAN Bd. 1997, Nr. 07, 31. Juli 1997 (1997-07-31) & JP 9 079377 A (UNISIA JECS CORP), 25. März 1997 (1997-03-25)

## Beschreibung

Die Erfindung betrifft einen Kolben für einen Verbrennungsmotor mit einem Kolbenboden und mit mindestens einer auf der kolbenbodenabgewandten Unterseite des Kolbens angeordneten Bolzennabe, die eine Bolzenbohrung zur Aufnahme eines Kolbenbolzens mit einer Innenfläche mit einem nicht formgebohrten Bereich und mit einer Quemut aufweist, wobei die Quemut in dem nicht formgebohrten Bereich der Innenfläche angeordnete ist, zur Längsachse der Bolzenbohrung zumindest näherungsweise parallel liegt und zur Ableitung von Kühlöl auf der Kolbenaußenseite eine Ausflussöffnung aufweist.

Aus der EP-PS 0 095 052 ist ein Kolben für einen Verbrennungsmotor mit einer Bolzennabe bekannt, die eine Bolzenbohrung mit einer Innenfläche aufweist, in die eine parallel zur Bolzenlängsachse angeordnete, auf beiden Seiten offene, nutförmige Ausnehmung eingearbeitet ist. Hierdurch ergibt sich im Motorbetrieb zwar eine gute Schmierung des Kolbenbolzens, aber die Ausnehmung bildet kein Ölreservoir, sodass nach Abstellen des Motors das sich in der Ausnehmung angesammelte Öl wieder aus der Ausnehmung herausfließt und beim Kaltstart des Motors nicht mehr zur Verfügung steht. Die Folgen sind schlechte Kaltstartbedingungen und Notlaufeigenschaften.

Aus der DE-OS 2 106 923 ist ein Brennkraftmaschinenkolben mit einer Bolzennabe bekannt, deren Bolzenbohrung eine halbkreisförmige, zur Bohrungslängsachse zirkular liegende Umlaufnut aufweist. In dieser Nut kann sich zwar Öl ansammeln, ein Abfluss des Öles ist hierbei aber nur über einen in Richtung des liegenden, senkrecht nach oben weisenden Ölkanal möglich, sodass sich das darin angesammelte Öl sehr stark aufheizt und damit an Schmierwirkung einbüßt.

Hiervon ausgehend liegt der Erfindung das Problem zugrunde, eine Bolzennabe mit einer Bolzenbohrung mit einem Nutsystem zu schaffen, das sowohl einen für eine gute Kühlung des Öles und damit für den Erhalt dessen Schmierwirkung ausreichenden Öldurchlauf gewährleistet, gleichzeitig aber ein Ölreservoir bildet, in dem sich bei Stillstand des Verbrennungsmotors Öl ansammelt, das zu einer Verbesserung der Kaltstartbedingungen des Verbrennungsmotors beiträgt.

Gelöst wird dieses Problem durch eine Ölumlaufnut , die in dem nicht formgebohrten Bereich der Innenfläche und zudem zur Längsachse zirkular angeordnet ist und die Quemut kreuzt, wobei in die Ölumlaufnut eine Ölversorgungsbohrung mündet, die über einen Ölzulauf mit einer auf der Kolbenaußenseite angeordneten Ölzulauföffnung verbunden ist.

Zweckmäßige Ausgestaltungen der Erfindung sind Gegenstand der Unteransprüche.

Einige Ausführungsbeispiele der Erfindung werden im Folgenden anhand der Zeichnungen beschrieben. Es zeigen
- Fig. 1: einen Schnitt durch eine Bolzennabe eines Kolbens im Bereich einer Ölumlaufnut der Bolzenbohrung entlang der Linie I-I in Fig. 2,
- Fig. 2: einen parallel zur Achse der Bolzenbohrung liegenden Schnitt durch die Bolzennabe entlang der Linie II-II in Fig. 1,
- Fig.: 3 eine weitere im Schnitt entlang der Linie II-II in Fig. 1 dargestellte Ausgestaltung des erfindungsgemäßen Nutsystemes mit einer separaten Zusatznut zum Ölabfluss und
- Fig. 4: einen im Teilschnitt dargestellten Kolben mit einer Ausgestaltung des Ölzuund -ablaufsystemes und der Ölumlaufnut.

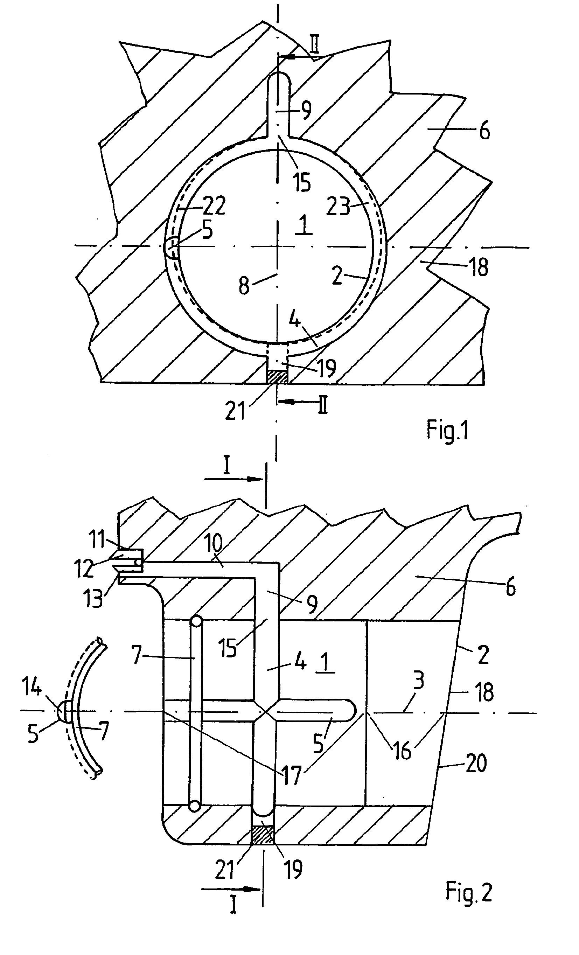

Fig. 1 zeigt im Querschnitt und Fig. 2 im Längsschnitt eine von zwei im Abstand voneinander angeordnete Bolzennaben 18 eines Kolbens 6 für einen Verbrennungsmotor, die jeweils eine Bolzenbohrung 1 aufweisen, deren Innenfläche 2 gemäß der in Fig. 2 dargestellten Ausgestaltung der Erfindung einen auf der Kolbenaußenseite liegenden nicht-formgebohrten Bereich 17, der kreiszylindrisch ausgebildet ist, und einen formgebohrten Bereich 16 aufweist, der sich von der Kolbeninnenseite zur Kolbenaußenseite hin leicht konisch verjüngt.

Anwendbar ist die erfinderische Lehre auch bei Bolzenbohrungen, die keinen formgebohrten Bereich aufweisen und in voller Länge kreiszylindrisch ausgebildet sind, bzw. bei Bolzenbohrungen, die einen zentral liegenden nicht-formgebohrten Bereich und beidseitig hiervon sowohl zur Kolbeninnen- als auch zur Kolbenaußenseite hin jeweils einen formgebohrten Bereich aufweisen.

In jedem Fall sind in den nicht-formgebohrten Bereich der Innenfläche 2 der Bolzenbohrung 1, der in Figur 2 mit 17 gekennzeichnet ist, eine zur Längsachse 3 der Bolzenbohrung 1 zirkular, über den gesamten Umfang der Innenfläche 2 der Bolzenbohrung 1 angeordnete Ölumlaufnut 4 und eine dazu axial liegende Quemut 5 eingearbeitet, die ausgehend von der Außenseite der Bolzennabe 18 vor dem innen liegenden, formgebohrten Teil 16 der Bolzenbohrung 1 endet. Bei einer rein zylindrisch ausgebildeten Bolzenbohrung ohne einen innenliegenden formgebohrten Bereich 16 endet die Quemut 5 kurz vor der inneren Stirnseite 20 der Bolzennabe 18, sodass die Quemut 5 bei eingeführtem Kolbenbolzen zur Kolbeninnenseite hin verschlossen ist.

Gemäß einem weiteren in den Figuren nicht dargestellten Ausführungsbeispiel kann die Quemut 5 auch nach außen hin und in Richtung des Kolbenbodens schräg angeordnet sein, sodass die Quemut 5 mit der Längsachse 3 einen zur Kolbenaußenseite hin offenen, spitzen Winkel einschließt. Der Vorteil hiervon liegt darin, dass bei Stillstand des Motors Schmieröl in der Quemut 5 verbleibt, welches die Kaltstartbedingungen des Motors verbessert. Im vorliegenden Ausführungsbeispiel ist die Quemut 5 im Äquatorbereich, das heißt, im mittleren Bereich der Bolzenbohrung 1 angeordnet. Die Quemut 5 kann hierbei auch in der dem Kolbenboden zugewandten oder in der dem Kolbenboden abgewandten Bohrungshälfte angeordnet sein.

Zur Außenseite der Bolzennabe 18 hin ist die Quemut 5 von einem Bolzensicherungsring 7 teilweise abgeschlossen. Die Quemut 5 ist aber zumindest im Bereich der Nabenaußenseite tiefer als die Nut des Bolzensicherungsringes 7 in die Innenfläche 2 eingearbeitet, sodass eine Ausflussöffnung 14 gebildet wird, aus der in die Quemut 5 eingeflossenes Öl auslaufen kann.

Die Quemut 5 hat zum einen die Funktion, das Schmieröl entlang der Längsachse 3 der Bolzenbohrung 1 zu verteilen, wodurch sich eine verbesserte Ölbenetzung des (in den Figuren nicht dargestellten) Kolbenbolzens ergibt. Zum anderen fließt über die Quemut 5 überschüssiges Öl aus der Bolzenbohrung 1 ab, wodurch eine Abfuhr von in der Kolbennabe entstandener Wärme bewirkt und eine lokale Überhitzung des Schmieröls vermieden wird. Im Motorbetrieb wird der Schmieröldurchlauf durch die auf das Schmieröl einwirkenden Schwer- und Massenkräfte unterstützt. Aus diesen Gründen kann bei intakter Nabenschmierung die Belastbarkeit der Bolzen-Naben-Kontaktfläche der dem Kolbenboden zugewandten Bohrungshälfte erhöht werden.

In den Zenit, das heißt, in den Bereich um den Scheitelpunkt der Ölumlaufnut 4 mündet über die Öffnung 15 eine radial angeordnete Ölversorgungsbohrung 9, die mit einem parallel zur Längsachse 3 liegenden Ölzulauf 10 verbunden ist, welcher in einer Ölzulauföffnung 13 mündet. Diese umfasst teilweise eine an der Außenfläche des Kolbens 6 angebrachte Ölabstreifringnut 11 und teilweise einen Bereich auf der der Kurbelwelle zugewandten Seite der Ölabstreifringnut 11. Hierüber gelangt von einem in der Ölabstreifringnut 11 angeordneten Ölabstreifring 12 von der Zylinderwand abgestreiftes Öl in den Ölzulauf 10, in die Ölversorgungsbohrung 9 und damit in das aus Ölumlaufnut 4 und Quemut 5 gebildete Nutsystem.

Wegen des geringen Radius der Bolzenbohrung 1 kann die Ölversorgungsbohrung 9 nur über eine Hilfsbohrung 19 in den Zenit der Bolzenbohrung 1 eingebracht werden. Nach Herstellung der Ölversorgungsbohrung 9 kann die Hilfsbohrung 19 mittels eines Bolzens 21 verschlossen werden. Mittels eines in die Bolzenbohrung 1 eingeführten Kolbenbolzens kann ein Verschluss der Hilfsbohrung 19 aber auch dadurch erreicht werden, dass die Ölumlaufnut 4 beidseitig der Hilfsbohrung 19 endet, sodass die Mantelfläche des Kolbenbolzens auf der inneren Öffnung der Hilfsbohrung 19 aufliegt und diese damit verschließt. In einer weiteren Alternative kann die Hilfsbohrung 19 von einem Kolbenbolzen dadurch verschlossen werden, dass der in Fig. 1 gestrichelt eingezeichnete Grund 22 einer Ölumlaufnut 23 auf einem zum kreisförmigen Querschnitt der Innenfläche 2 derart exzentrisch liegenden, gedachten Kreis liegt, dass die Tiefe der Ölumläufnut 23 im Bereich der Ölversorgungsbohrung 9 maximal ist und im Bereich der Hilfsbohrung 19 einen Nullwert aufweist, sodass auch hierbei die Ölumlaufnut 23 beidseitig der Hilfsbohrung 19 endet und ein in die Bolzenbohrung 1 eingeführter (in der Figur nicht dargestellter) Kolbenbolzen mit seiner Mantelfläche auf der inneren Öffnung der Hilfsbohrung 19 aufliegt und diese damit verschließt.

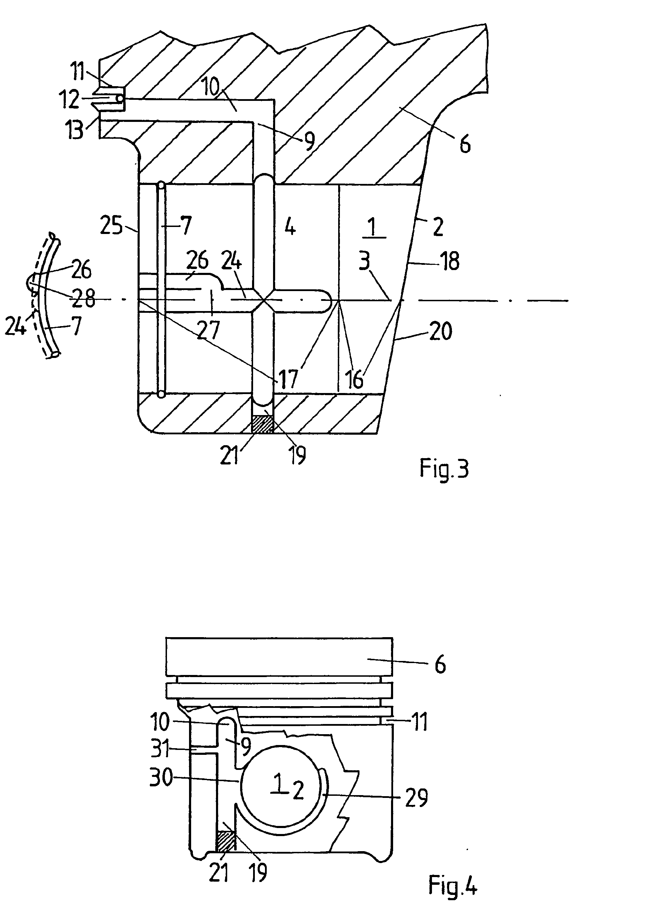

Eine weitere Ausgestaltung einer Quernut 24 ist in Fig. 3 dargestellt, die sich von der Quernut 5 gemäß Fig. 2 dadurch unterscheidet, dass deren Nuttiefe geringer als die Tiefe der für den Bolzensicherungsring 7 vorgesehenen Nut ist, sodass die Quemut 24 zur Außenseite 25 der Bolzennabe 18 hin vom Bolzensicherungsring 7 verschlossen wird. Hierbei bilden nicht nur die dem Kolbenboden abgewandte Hälfte der Ölumlaufnut 4 sondern auch die Quemut 24 ein Ölreservoir, das zur Verbesserung der Kaltstarteigenschaften des Motors beiträgt. Der zur Kühlung der Bolzennabe 18 beitragende Ölumlauf ist hierbei durch eine Zusatznut 26 gewährleistet, die in dem dem Kolbenboden zugewandten Bereich der Innenfläche 2 der Bolzenbohrung 1 angeordnet und über eine Ausnehmung 27 mit der Quemut 24 verbunden ist, parallel zur Längsachse 3 liegt und eine größere Tiefe als die Nut des Bolzensicherungsringes 7 aufweist, sodass sich auf der Außenseite 25 der Bolzennabe 18 eine Ausflussöffnung 28 ergibt, durch die das zur Kühlung und Schmierung des Kolbenbolzens über den Ölzulauf 10 und die Ölversorgungsbohrung 9 in die Ölumlaufnut 4 einfließende Öl abfließen kann.

In einer Ausgestaltung der Erfindung gemäß eines in Fig. 4 gezeigten Teilschnittes eines Kolbens 6 sind im Vergleich zu der in Fig. 1 gezeigten Ausgestaltung die Ölversorgungsbohrung 9 und die Hilfsbohrung 19 nicht mittig sondern seitlich zur Bolzenbohrung 1 derart angeordnet, dass sich zwischen der Bolzenbohrung 1 und der Ölversorgungsbohrung 9 eine Öffnung 30 bildet, über die eine Ölumlaufnut 29 mit Öl versorgt wird. Der Ölzulauf 10 ist gemäß den in Fig. 2 und 3 dargestellten Ausgestaltungen der Erfindung ausgebildet und in Fig. 4 nur angedeutet. Auch hierbei erfolgt der Ölablauf über eine in Fig. 4 nicht dargestellte Quernut. Zudem ist zu diesem Zweck eine Zusatzbohrung 31 vorgesehen, die nahe dem Ölzulauf 10 in die Ölversorgungsbohrung 9 mündet und diese mit der Kolbenaußenseite verbindet. Der Zweck der Zusatzbohrung 31 besteht darin, dem unter betriebsbedingt erhöhtem Druck stehenden Schmieröl eine zusätzliche Ablauföffnung zu bieten, um von überhöhtem Öldruck verursachte Kolbenschäden zu vermeiden.

In der in Fig. 4 dargestellte Ausgestaltung der Erfindung läuft die Ölumlaufnut 29 nur über den Nadir- und Äquatorbereich, das heißt, über den Bereich um den Fußpunkt und über den mittleren Bereich der Innenfläche 2 der Bolzenbohrung 1, sodass der Zenitbereich, das heißt, der Bereich um den Scheitelpunkt der Innenfläche 2 frei von Nuten ist. Dies hat den Vorteil, dass hierdurch die Bolzen-Naben-Kontaktfläche vergrößert und die Flächenpressung im Zenitbereich der Bolzenbohrung verringert wird, sodass durch eine zu große Flächenpressung verursachte Bolzen- und/oder Nabenschäden weitgehend vermieden werden.

Beim Betrieb mit eingeführtem Kolbenbolzen bildet die Ölumlaufnut 4, 29 im Bereich unterhalb der Quemut 5, 26 ggf. gemeinsam mit der nach außen verschlossenen Quemut 24 ein relativ großes Ölreservoir, in das Öl einlaufen kann. Der Abbau des in diesem Ölreservoir gebildeten Ölvorrates findet ausschließlich über den beim Betrieb üblichen Ölaustausch in der Bolzennabe 18 statt. Die Größe des Ölreservoirs bedingt zum einen eine sehr gute Ölversorgung des in der Bolzennabe 18 drehbar gelagerten Kolbenbolzens, was die Betriebssicherheit sehr erhöht. Zum anderen verbleibt im Ruhezustand der Ölvorrat im Ölreservoir erhalten, was sehr gute Kaltstartbedingungen mit sich bringt, wodurch insb. Nabenreiber, harte Tragspuren und Fresser zwischen Kolbenbolzen und Bolzenbohrung 1 vermieden werden. Letztlich findet im Motorbetrieb ein stetiger Umlauf von über die Ölzulauföffnung 13 in das Nutsystem 4, 5, 24, 28 einfließendem und über die Ausflussöffnung 14, 26 abfließendem Öl statt, wodurch eine gute Kühlung dieses Öles gewährleistet ist und eine Überhitzung dieses Öles und damit eine Verkokung und eine Verschlechterung der Schmierwirkung des Öles vermieden werden.

## Patentansprüche

1. Kolben (6) für einen Verbrennungsmotor mit einem Kolbenboden und mit mindestens einer auf der kolbenbodenabgewandten Unterseite des Kolbens angeordneten Bolzennabe (18), die eine Bolzenbohrung (1) zur Aufnahme eines Kolbenbolzens mit einer Innenfläche (2) mit einem nicht formgebohrten Bereich (17) und mit einer Quemut (5, 24, 26) aufweist, wobei die Quemut (5, 24, 26) in dem nicht formgebohrten Bereich (17) der Innenfläche (2) angeordnete ist, zur Längsachse (3) der Bolzenbohrung (1) zumindest näherungsweise parallel liegt und zur Ableitung von Kühlöl auf der Kolbenaußenseite eine Ausflussöffnung (14, 28) aufweist,
**gekennzeichnet durch** eine Ölumlaufnut (4, 29), die in dem nicht formgebohrten Bereich (17) der Innenfläche (2) und zudem zur Längsachse (3) zirkular angeordnet ist und die Quemut (5, 24, 26) kreuzt, wobei in die Ölumlaufnut (4, 29) eine Ölversorgungsbohrung (9) mündet, die über einen Ölzulauf (10) mit einer auf der Kolbenaußenseite angeordneten Ölzulauföffnung (13) verbunden ist.

2. Kolben nach Anspruch 1, **dadurch gekennzeichnet, dass** die Quemut (5) in der dem Kolbenboden zugewandten oder in der dem Kolbenboden abgewandten Hälfte der Bolzenbohrung (1) angeordnet ist.

3. Kolben nach einem der vorhergehenden Ansprüche, **dadurch gekennzeichnet, dass** die Ölumlaufnut (4) über den gesamte Umfang der Innenfläche (2) der Bolzenbohrung (1) umläuft.

4. Kolben nach einem der vorhergehenden Ansprüche, **dadurch gekennzeichnet, dass** die Ölzulauföffnung (13) teilweise eine Ölabstreifringnut (11) des Kolbens (6) und teilweise einen Bereich auf der der Bolzennabe (18) zugewandten Seite der Ölabstreifringnut (11) umfasst.

5. Kolben nach einem der vorhergehenden Ansprüche, **dadurch gekennzeichnet, dass** die Ölversorgungsbohrung (9) parallel zur Längsachse (8) des Kolbens (6) angeordnet ist und die Bolzenbohrung (1) im Bereich der Ölumlaufnut (29) derart tangiert, dass sich eine Öffnung (30) zwischen der Ölversorgungsbohrung (9) und der Ölumlaufnut (29) ergibt.

6. Kolben nach Anspruch 5, **dadurch gekennzeichnet, dass** die Ölumlaufnut (29) im Äquator- und Nadirbereich, das heißt, im mittleren Bereich und im Bereich des Fußpunktes der Bolzenbohrung (1) angeordnet ist.

## Claims

1. Piston (6) for a combustion engine with a piston crown and with at least one pin hub (18) arranged on the bottom side of the piston facing away from the piston crown, which has a pin bore (1) for accommodating a piston crown with an internal surface (2) with an area that is not form-drilled (17) and with a crosswise slot (5, 24, 26), where the crosswise slot (5, 24, 26) is arranged in the area without form drilling (17) on the internal surface (2), it is situated nearly parallel to the longitudinal axis (3) of the pin bore (1) and has an orifice (14, 28) for discharging cooling oil on the external side of the piston,
**marked by** an oil circulation slot (4, 29), which is arranged in the area without form drilling (17) on the internal surface (2) and it is arranged circularly with regard to the longitudinal axis (3) crossing the crosswise slot (5, 24, 26) where an oil supply bore (9) leads to the oil circulation slot (4, 29) which is connected through an oil inlet (10) with an oil inlet opening (13) arranged on the external side of the piston.

2. Piston according to Claim 1, **characterised by the fact** that the crosswise slot (5) is arranged in the half of the pin bore (1) facing the piston crown or in that facing away from the piston crown.

3. Piston according to one of the previous claims, **characterised by the fact** that the oil circulation slot (4) runs over the complete internal surface (2) of the pin bore (1).

4. Piston according to one of the previous claims, **characterised by the fact** that the oil inlet opening (13) encompasses partially an oil scraper ring (11) of the piston (6) and partially an area on the side of the oil scraper ring (11) facing the pin hub (18).

5. Piston according to one of the previous claims, **characterised by the fact** that the oil supply bore (9) is arranged in parallel to the longitudinal axis (8) of the piston (6) and the pin bore (1) in the area of the oil circulation slot (29) is in a tangent position in such a way to result in an opening (30) between the oil supply bore (9) and the oil circulation slot (29).

6. Piston according to Claim 5, **characterised by the fact** that the oil circulation slot (29) is arranged in the equator and nadir area, i.e. in the middle area and in the area of the root point of the pin bore (1).

## Revendications

1. Piston (6) pour un moteur à combustion avec un fond de piston et avec au minimum un moyeu à goupille (18) intégré à la partie inférieure du piston tournée contre le fond de piston et qui présente un alésage de goupille (1) servant à loger un axe de piston avec une surface interne (2) ayant une zone non percée (17) et une rainure transversale (5, 24, 26), la rainure transversale (5, 24, 26) étant intégrée à la zone non percée (17) de la surface interne (2), étant placée, au moins approximativement, parallèlement à l'axe longitudinal (3) de l'alésage de goupille (1) et présentant un orifice d'écoulement (14, 28) pour détourner l'huile de refroidissement vers le côté extérieur du piston, **caractérisé en ce que** une rainure de circulation d'huile (4, 29) est intégrée à la zone non percée (17) de la partie interne (2) et de plus placée de manière circulaire par rapport à l'axe longitudinal (3) et croise la rainure transversale (5, 24, 26), tandis que sur la rainure de circulation d'huile (4, 29) débouche sur un alésage d'alimentation en huile (9) qui est relié à un orifice d'entrée d'huile (13) situé sur le côté extérieur du piston par le biais d'une arrivée d'huile (10).

2. Piston selon la revendication 1, **caractérisé en ce que** la rainure transversale (5) est intégrée à la moitié de l'alésage de goupille (1) tournée vers le sol de piston ou contre le sol de piston.

3. Piston selon une des revendications précédentes, **caractérisé en ce que** la rainure de circulation d'huile (4) court sur toute l'étendue de la surface interne (2) de l'alésage de goupille (1).

4. Piston selon une des revendications précédentes, **caractérisé en ce que** l'orifice d'entrée de l'huile (13) englobe en partie un segment racleur d'huile (11) du piston (6) et en partie une zone sur le côté dirigé vers le moyeu à goupille (18) du segment racleur d'huile (11).

5. Piston selon une des revendications précédentes, **caractérisé en ce que** l'alésage d'alimentation en huile (9) est placé parallèlement à l'axe longitudinal (8) du piston (6) et l'alésage de goupille (1) est placé de telle manière dans la zone de la rainure de circulation d'huile (29) qu'il en résulte une ouverture (30) entre l'alésage d'alimentation en huile (9) et la rainure de circulation d'huile (29).

6. Piston selon la revendication 5, **caractérisé en ce que** la rainure de circulation d'huile (29) est placée dans les zones équateur et nadir soit dans la zone centrale et au pied de l'alésage de goupille (1).
